# EUROPEAN PATENT SPECIFICATION

(11) **EP 2 546 959 B1**
(45) Date of publication and mention of the grant of the patent: **29.07.2020**
(21) Application number: 10847418.0
(22) Date of filing: 10.03.2010
(51) Int. Cl.: H02K 1/27, H02K 11/215, H02K 5/173, H02K 1/30, H02K 15/10, H02K 15/12

(54) **ELECTRIC MOTOR ROTOR, ELECTRIC MOTOR, AIR CONDITIONER, AND PRODUCTION METHOD FOR ELECTRIC MOTOR ROTOR**
ELEKTOMOTORLÄUFER, ELEKTROMOTOR, KLIMAANLAGE UND HERSTELLUNGSVERFAHREN FÜR DEN ELEKTROMOTORLÄUFER
ROTOR DE MOTEUR ÉLECTRIQUE, MOTEUR ÉLECTRIQUE, CONDITIONNEUR D'AIR, ET PROCÉDÉ DE FABRICATION DE ROTOR DE MOTEUR ÉLECTRIQUE

(43) Date of publication of application: 16.01.2013
(73) Proprietor: Mitsubishi Electric Corporation, Tokyo 100-8310 (JP)
(72) Inventor: KAWAKUBO,Mamoru, Tokyo 100-8310 (JP); YAMAMOTO,Mineo, Tokyo 100-8310 (JP); ISHII,Hiroyuki, Tokyo 100-8310 (JP); YAMAZAKI,Tougo, Tokyo 100-8310 (JP); ASOU,Hiroki, Tokyo 100-8310 (JP)
(74) Representative: Pfenning, Meinig & Partner mbB
(86) International application number: PCT/JP2010/054003
(87) International publication number: WO 2011/111188

(56) References cited:
- JP-A- H1 082 349
- JP-A- 2005 033 999
- JP-A- 2006 121 857
- JP-A- 2007 221 866
- JP-A- 2007 221 866
- JP-A- 2008 263 698
- JP-A- 2010 011 637
- US-A1- 2005 012 415

## Description

### Field

The present invention relates to an electric motor rotor in which a roller bearing is used and relates to an electric motor rotor suitable for an electric motor driven by an inverter. Further, the present invention relates to an electric motor in which the electric motor rotor is used, a method of manufacturing the electric motor rotor, and an air conditioner mounted with the electric motor.

### Background

Conventionally, when an electric motor is operated using an inverter, for the purpose of realizing a reduction in noise of the electric motor caused according to switching of transistors in a power circuit, a carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current easily flows to the roller bearing. There is a problem in that the electric current flowing to the roller bearing causes corrosion called electrolytic corrosion on both tracks of the inner ring and the outer ring and a rolling contact surface of a rolling element (balls or rollers that roll between the inner and outer rings) and deteriorates the durability of the roller bearing.

Therefore, to obtain an electric motor having a simple configuration and easily assembled that can prevent an electric current from flowing to a roller bearing provided between a shaft and a motor case and prevent electrolytic corrosion from occurring in the roller bearing, an electric motor including a stator formed by winding a coil, a frame that fixes the stator, a rotor opposed to the stator via a very small air gap, a shaft fixedly attached with the rotor and rotatably born via the roller bearing, and a bearing bracket that supports the roller bearing via an insulating material is provided, wherein a concave section is provided on a side of the bearing bracket in contact with the insulating material, and a convex section corresponding to the concave section of the bearing bracket is provided in the insulating material, such that the convex section of the insulating material is fit in the concave section of the bearing bracket and fixed (see, for example, Patent Literature 1).

An electrolytic corrosion preventing roller bearing in which an insulating coating film is formed on an inner ring fitting surface or an outer ring fitting surface of a roller bearing or both of the inner ring fitting surface and the outer ring fitting surface is proposed, wherein a boundary surface between a circumferential surface of the inner ring fitting surface or a circumferential surface of the outer ring fitting surface and a chamfered section assumes a gentle taper surface or an arcuate surface having a large curvature radius, and the electrolytic corrosion preventing roller bearing has, on at least one fitting surface, an insulating coating film of an inorganic compound by thermal spraying (see, for example, Patent Literature 2).

### Citation List

### Patent Literature

Patent Literature 1: Japanese Patent Application Laid-open No. 2000-156952
Patent Literature 2: Japanese Patent Application Laid-open No. 59-103023

US2005012415A1 discloses that a sliding hole is formed so that a screw portion can pass therethrough. Also, a seal member is provided at a portion, through which the screw portion placed in the sliding hole can pass and in which a sliding portion does not slide.

### Summary

### Technical Problem

However, the electric motor disclosed in Patent Literature 1 has the configuration in which the bearing bracket supports the roller bearing via the insulating material. Therefore, it is necessary to provide the insulating material as a separate component. There is a problem in that the number of components increases and costs increase.

In the electrolytic corrosion preventing roller bearing disclosed in Patent Literature 2, the boundary surface between the circumferential surface of the inner ring fitting surface or the peripheral surface of the outer ring fitting surface and the chamfered section assumes the gentle taper surface or the arcuate surface having the large curvature radius and the insulating coating film of the inorganic compound by thermal spraying is formed on at least one fitting surfaces. Therefore, there is a problem in that costs increase.

The present invention has been devised to solve the problems explained above and it is an object of the present invention to provide an electric motor rotor, an electric motor, a method of manufacturing the electric motor rotor, and an air conditioner that can suppress electrolytic corrosion of a roller bearing without damaging productivity and quality because a resin section for integrally molding a rotor magnet, a shaft, and the like is arranged to extend to between the shaft and the roller bearing.

### Solution to Problem

In order to solve the aforementioned problems, an electric motor which comprises a rotor and a stator according to claim 1 is provided.

### Advantageous Effects of Invention

In the electric motor rotor according to the present invention, because the resin section is formed between the shaft and the roller bearing, there is an effect of preventing an electric current flowing through the roller bearing, suppressing electric corrosion, and preventing occurrence of abnormal sound. Further, because insulation between the shaft and the roller bearing is performed by the resin section for integrating the rotor magnet and the shaft, the electric motor rotor is simple in a configuration and can be reduced in costs.

### Brief Description of Drawings

FIG. 1 is a diagram showing a first embodiment and is a sectional view of an electric motor 100.
FIG. 2 is a diagram showing the first embodiment and is a perspective view of a stator 40.
FIG. 3 is a diagram showing the first embodiment and is a sectional view of a rotor 20.
FIG. 4 is a diagram showing the first embodiment and is an enlarged sectional view of a counter load side end of a shaft 23.
FIG. 5 is a diagram showing the first embodiment and is a diagram showing a rotor resin magnet 22 ((a) is a left side view, (b) is an A-A sectional view of (a), and (c) is a right side view).
FIG. 6 is a diagram showing the first embodiment and is a diagram showing a resin magnet for position detection 25 ((a) is a left side view, (b) is a front view, and (c) is an A section enlarged view of (b)).
FIG. 7 is a diagram showing the first embodiment and is a sectional view of the rotor 20 according to a first modification.
FIG. 8 is a diagram showing the first embodiment and is a sectional view of the rotor 20 according to a second modification.
FIG. 9 is a diagram showing the first embodiment and is a sectional view of the rotor 20 according to a third modification.
FIG. 10 is a diagram showing the first embodiment and is a sectional view of the rotor 20 according to a fourth modification.
FIG. 11 is a diagram showing the first embodiment and is a sectional view of the rotor 20 according to a fifth modification.
FIG. 12 is a diagram showing the first embodiment and is a configuration diagram of a driving circuit 200 that drives the electric motor 100.
FIG. 13 is a diagram showing the first embodiment and is a diagram showing a manufacturing process for the rotor 20.
FIG. 14 is a diagram showing a second embodiment and is a configuration diagram of an air conditioner 300.

### Description of Embodiments

### First Embodiment.

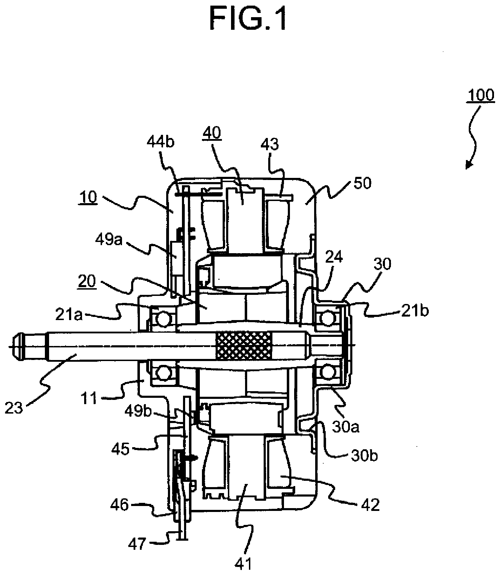

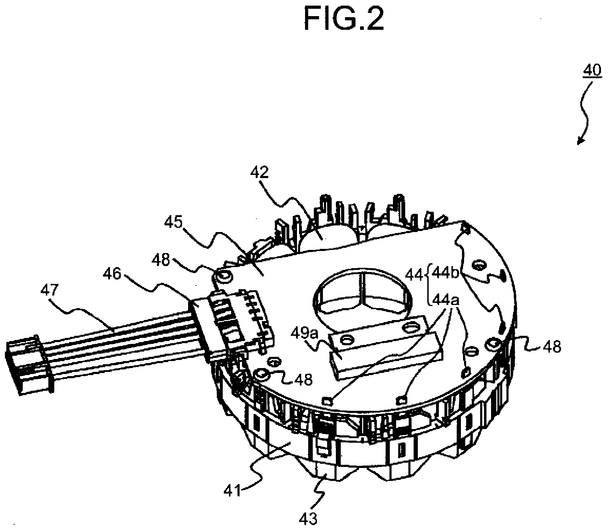

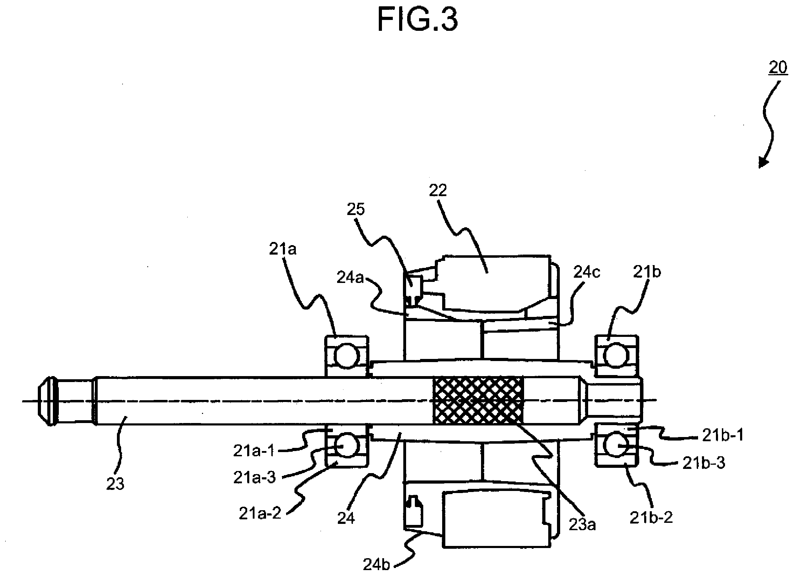

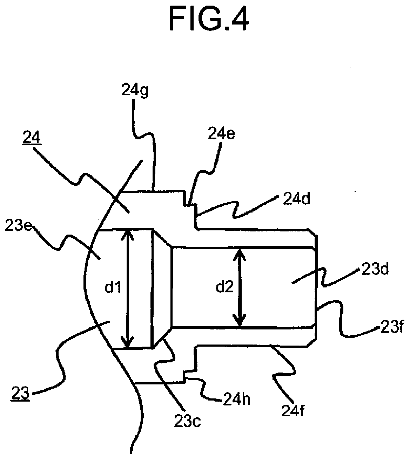

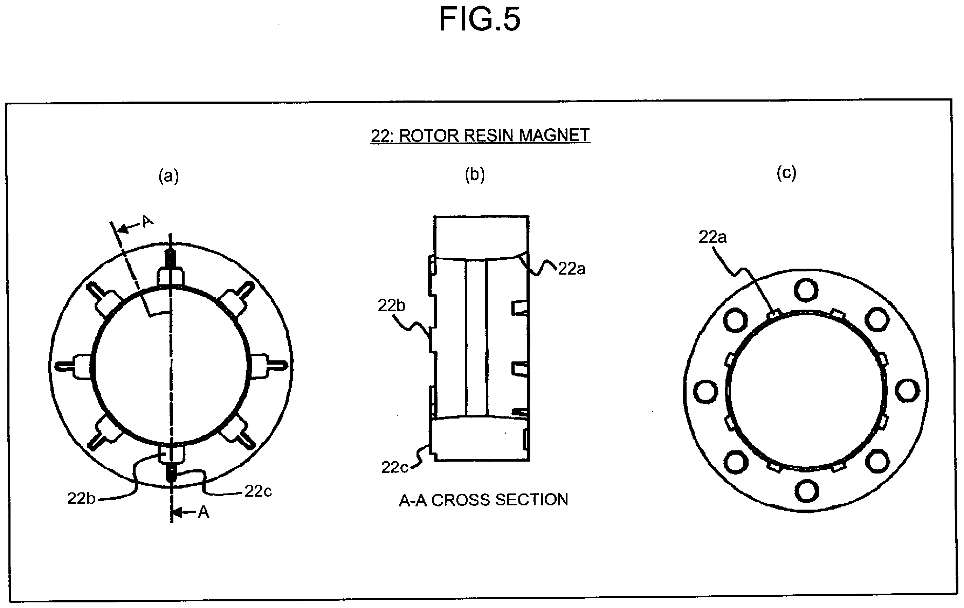

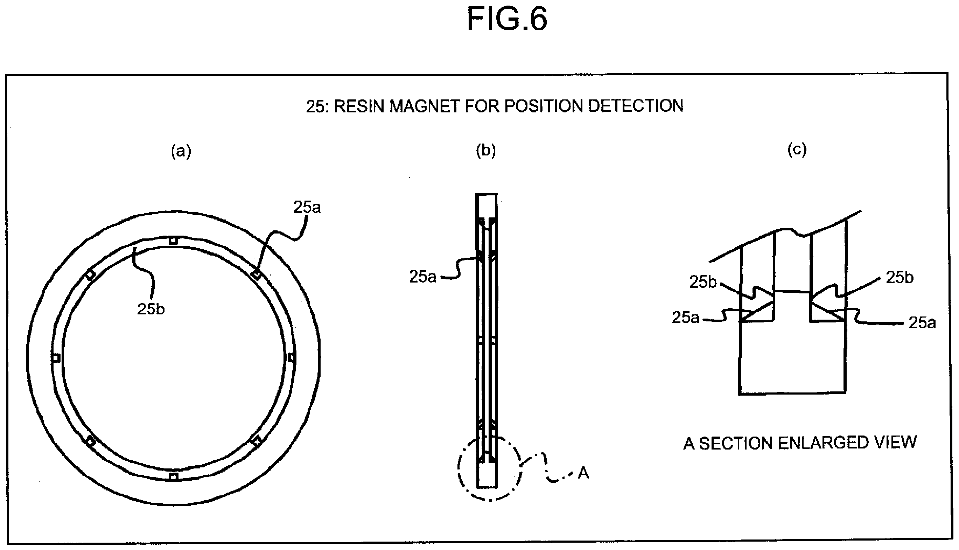

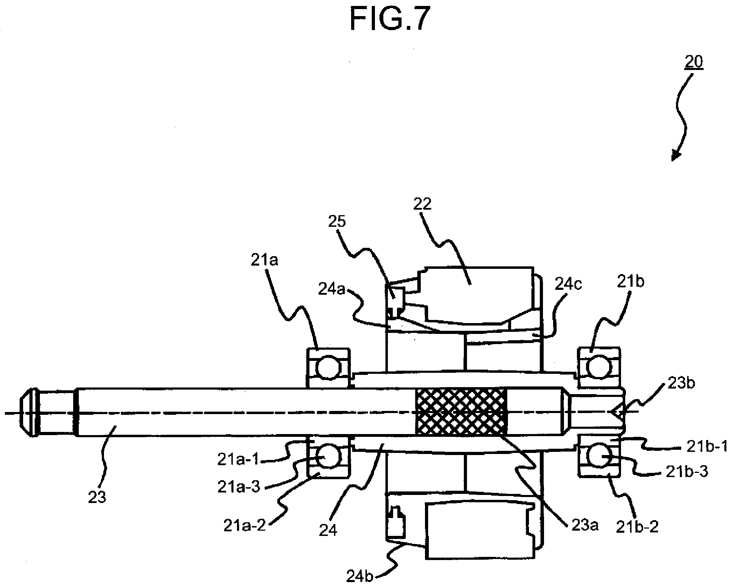

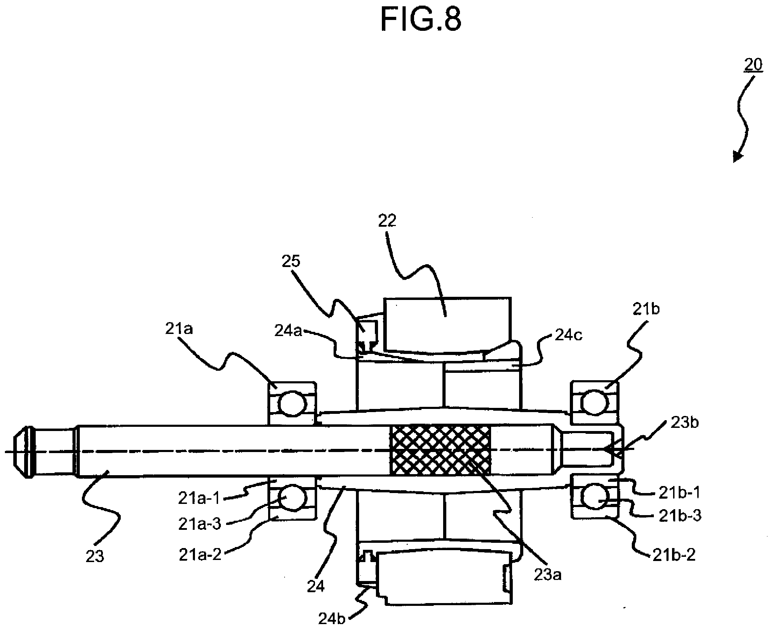

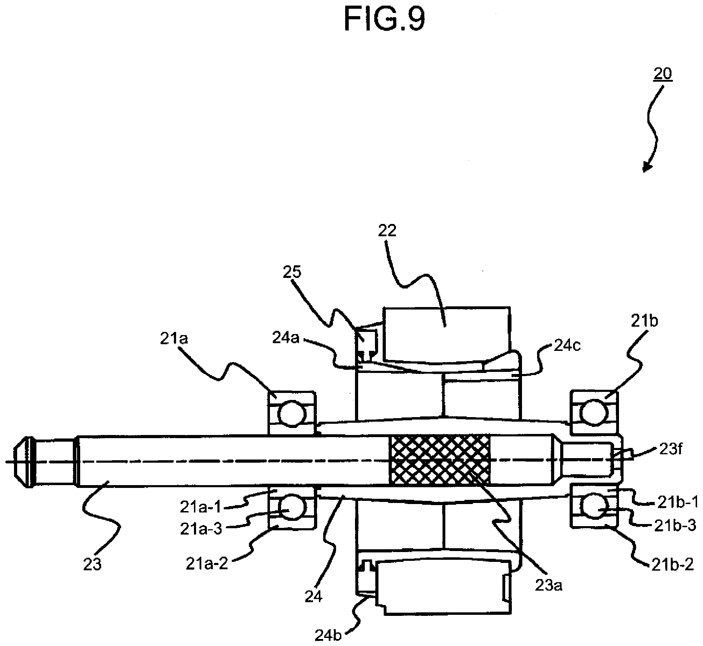

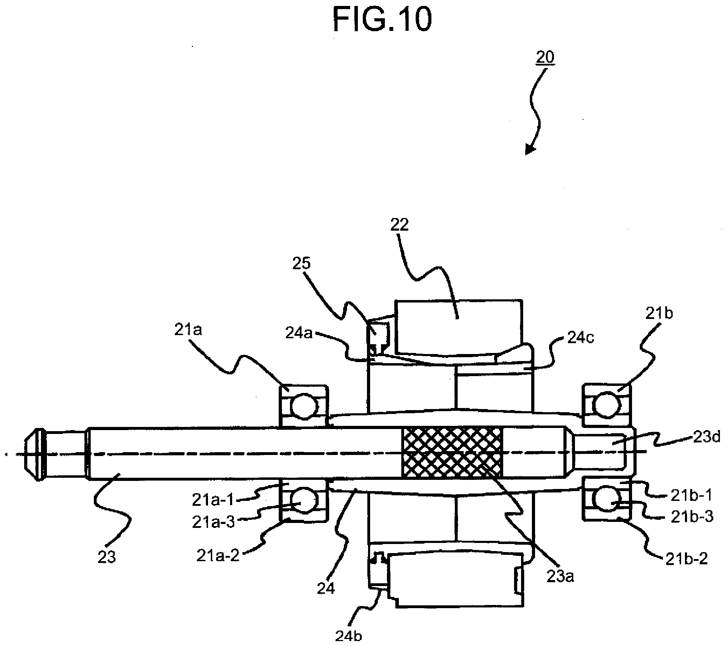

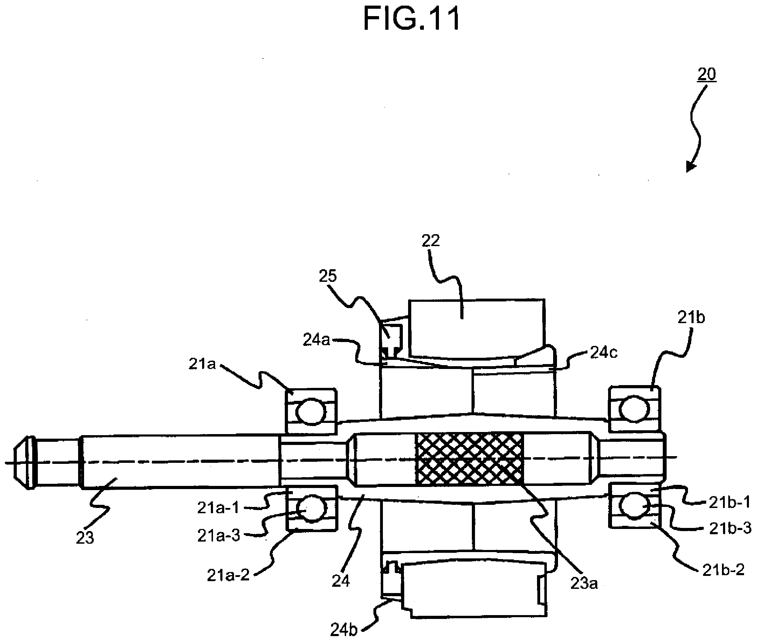

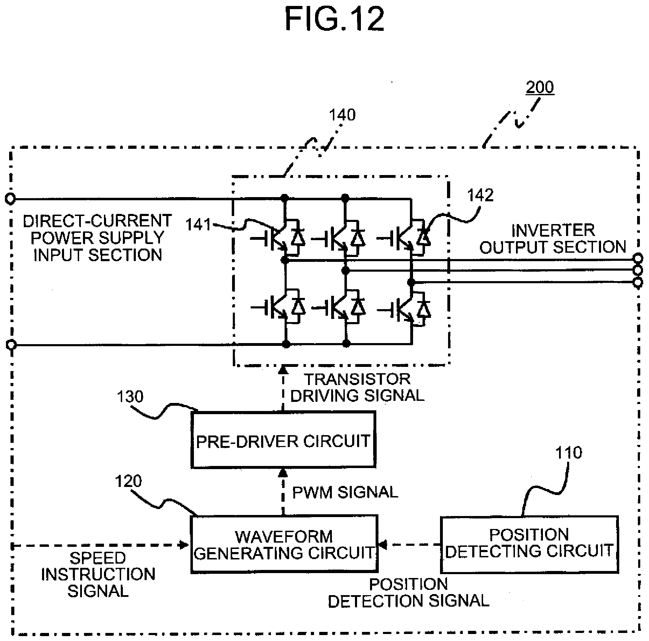

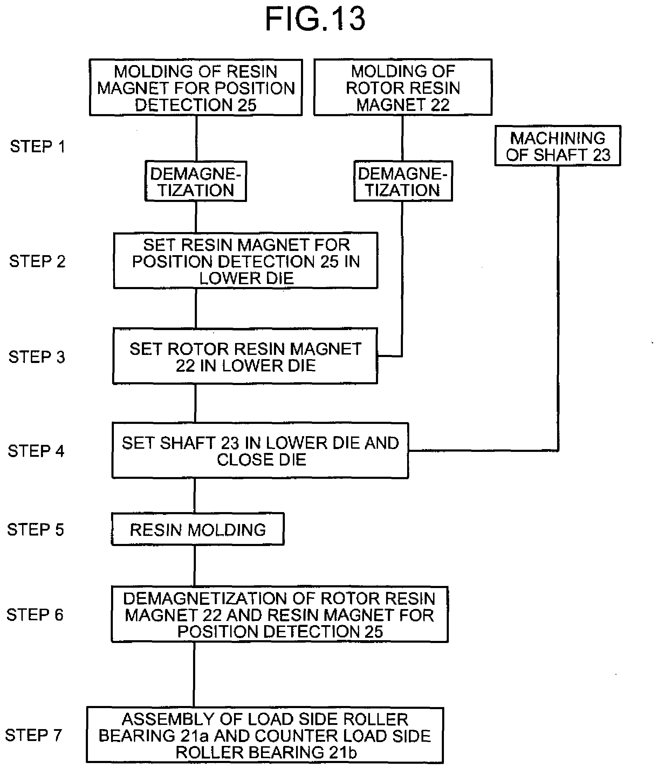

FIGS. 1 to 13 are diagrams showing a first embodiment. FIG. 1 is a sectional view of an electric motor 100. FIG. 2 is a perspective view of a stator 40. FIG. 3 is a sectional view of a rotor 20. FIG. 4 is an enlarged sectional view of a counter load side end of a shaft 23. FIG. 5 is a diagram showing a rotor resin magnet 22 ((a) is a left side view, (b) is an A-A sectional view of (a), and (c) is a right side view). FIG. 6 is a diagram showing a resin magnet for position detection 25 ((a) is a left side view, (b) is a front view, and (c) is an A section enlarged view of (b)). FIG. 7 is a sectional view of the rotor 20 of a first modification. FIG. 8 is a sectional view of the rotor 20 of a second modification. FIG. 9 is a sectional view of the rotor 20 of a third modification. FIG. 10 is a sectional view of the rotor 20 of a fourth modification. FIG. 11 is a sectional view of the rotor 20 of a fifth modification. FIG. 12 is a configuration diagram of a driving circuit 200 that drives the electric motor 100. FIG. 13 is a diagram showing a manufacturing process for the rotor 20.

The configuration of the electric motor 100 is explained. As shown in FIG. 1, the electric motor 100 includes a mold stator 10, the rotor 20 (defined as an electric motor rotor), and a bracket 30 of metal attached to one axis direction end (hereinafter referred to just as "axis direction one end") of the mold stator 10. The electric motor 100 is, for example, a brushless DC motor including a permanent magnet in the rotor 20 and driven by an inverter.

The mold stator 10 is opened at the axis direction one end (the right side in FIG. 1). The rotor 20 is inserted from this opening. At the other axis direction end (hereinafter referred to just as "axis direction other end") (the left side in FIG. 1) of the mold stator 10, a hole (not shown in the figure) slightly larger than the diameter of the shaft 23 of the rotor 20 is opened. In the rotor 20 inserted from the axis direction one end of the mold stator 10, the shaft 23 on a load side sticks out to the outside (the left side in FIG. 1) from the hole at the axis direction other end of the mold stator 10. A load side roller bearing 21a (an example of a roller bearing) of the rotor 20 is pushed in until it comes into contact with a bearing supporting section 11 at an axis direction end on a counter opening side of the mold stator 10. At this point, the load side roller bearing 21a is supported by the bearing supporting section 11 formed at the axis direction end on the counter opening end side of the mold stator 10.

In the rotor 20, a counter load side roller bearing 21b (an example of a roller bearing) is attached to the shaft 23 on the counter load side (the right side in FIG. 1) (in general, attached by press-fitting). The bracket 30 that closes the opening of the mold stator 10 and supports the counter load side roller bearing 21b is press-fitted into the mold stator 10. The bracket 30 supports the counter load side roller bearing 21b with a bearing supporting section 30a. The press-fitting of the bracket 30 into the mold stator 10 is performed by press-fitting a press-fitting section 30b, which has a substantially ring shape and a C shape in cross section, of the bracket 30 into the opening side of an inner circumferential section 10a (a mold resin section) of the mold stator 10. The outer diameter of the press-fitting section 30b of the bracket 30 is larger than the inner diameter of the inner circumferential section 10a of the mold stator 10. The material of the bracket 30 is metal, for example, galvanized steel sheet. However, the material is not limited to the galvanized steel sheet.

This embodiment has a characteristic in the structure of the rotor 20. Therefore, the mold stator 10 is explained briefly.

The mold stator 10 includes the stator 40 and mold resin 50 for molding. As the mold resin 50, thermosetting resin such as unsaturated polyester resin is used. Low-pressure molding is desirable for the stator 40 because the stator 40 is attached with a substrate or the like explained below and has low-strength structure. Therefore, the thermosetting resin such as the unsaturated polyester resin is used.

The stator 40 has a configuration explained below.
(1) A belt-like stator iron core 41 in which an electromagnetic steel sheet having thickness of about 0.1 to 0.7 millimeter is perforated in a belt shape and laminated by caulking, welding, bonding, or the like is manufactured. The belt-like stator iron core 41 includes a plurality of teeth (not shown). The inner side to which a concentratedly-wound coil 42 explained below is applied is the teeth.
(2) An insulating section 43 is applied to the teeth. The insulating section 43 is molded integrally with or separately from the stator iron core 41 using thermoplastic resin such as PBT (polybulylene terephthalate).
(3) The concentratedly-wound coil 42 is wound around the teeth to which the insulating section 43 is applied. A plurality of the concentratedly-wound coils 42 are connected to form winding of three-phase single Y connection. However, distributed winding is also acceptable.
(4) Because the winding is the three-phase single Y connection, terminals 44 (power supply terminals 44a to which a power supply is supplied and neutral terminals 44b to which the coils of respective phases (a U phase, a V phase, and a W phase) are connected) are assembled to the connection side of the insulating section 43. There are three power supply terminals 44a and three neutral terminals 44b.
(5) A substrate 45 is attached to the insulating section 43 on the connection side (a side to which the terminals 44 are assembled). The substrate 45 assembled with a lead wire leading component 46 for leading a lead wire 47 is assembled to the insulating section 43 to configure the stator 40. A chamfered square pillar 48 of the insulating section 43 formed in the stator iron core 41 is inserted into a square pillar insertion hole (not shown in the figure) included in the substrate 45, whereby positioning in a rotating direction is performed. The substrate 45 is set on a substrate setting surface of the insulating section 43, whereby a position in the axis direction is determined. The substrate 45 and the insulating section 43 are fixed by thermally welding the square pillar 48 projecting from the substrate 45 and are electrically jointed by soldering a section of the terminals 44 included in the stator 40 projecting from the substrate 45. An IC 49a (a driving element) that drives the electric motor 100 (e.g., a brushless DC motor), a Hall IC 49b (a position detecting element) that detects the position of the rotor 20, and the like are mounted on the substrate 45. The IC 49a, the Hall IC 49b, and the like are defined as electronic components.

The configuration of the rotor 20 is explained. As shown in FIG. 3, the rotor 20 includes the shaft 23 applied with a knurl 23a, a ring-like rotor resin magnet 22 (an example of a rotor magnet), a ring-like resin magnet for position detection 25 (an example of a magnet for position detection), and a resin section 24 for integrally molding these components.

The ring-like rotor resin magnet 22, the shaft 23, and the resin magnet for position detection 25 are integrated by the resin section 24. At this point, the resin section 24 contains a center cylindrical section 24g (a section corresponding to the rotor resin magnet 22) explained below, which is formed in the outer circumference of the shaft 23, and a plurality of ribs (not shown in the figure) in the axis direction radially formed in the radial direction centering on the shaft 23 for coupling the rotor resin magnet 22 to the center cylindrical section 24g. Hollows piercing through in the axis direction are formed among the ribs.

As resin used in the resin section 24, thermoplastic resin such as PBT (polyethylene terephthalate) or PPS (polyphenylene sulfide) is used. Materials obtained by mixing a glass filler in these kinds of resin are also suitable.

The counter load side roller bearing 21b is attached to the shaft 23 on the counter load side (the right side in FIG. 3) (in general, by press-fitting). A load side roller bearing 21a is attached to the shaft 23 on the load side to which a fan and the like are attached (the left side in FIG. 3).

The load side roller bearing 21a and the counter load side roller bearing 21b are publicly-known roller bearings.

The load side roller bearing 21a includes an inner ring 21a-1 press-fitted into the shaft 23, an outer ring 21a-2 supported by the bearing supporting section 11 of the mold stator 10, and a rolling element 21a-3 that rolls between the inner ring 21a-1 and the outer ring 21a-2. Balls or rollers are used as the rolling element 21a-3.

The counter load side roller bearing 21b includes an inner ring 21b-1 press-fitted into the shaft 23, an outer ring 21b-2 supported by the bearing supporting section 30a of the bracket 30, and a rolling element 21b-3 that rolls between the inner ring 21b-1 and the outer ring 21b-2. Ball or rollers are used as the rolling element 21b-3.

This embodiment has a characteristic in interposing the resin section 24 for integrally molding the shaft 23, the ring-like rotor resin magnet 22, and the ring-like resin magnet for position detection 25 between the counter load side roller bearing 21b supported by the bracket 30 of metal (having electric conductivity) and the shaft 23, and suppressing a shaft current using the resin section 24 as insulation to thereby suppress occurrence of electrolytic corrosion of the counter load side roller bearing 21b. However, this embodiment can also be applied when the ring-like resin magnet for position detection 25 is not provided.

During the integral molding of the rotor 20, the rotor 20 is molded such that the resin section 24 extends to the end of the shaft 23 on the counter load side.

In the load side roller bearing 21a, the outer ring 21a-2 is supported by the bearing supporting section 11 (formed by the mold resin 50) of the mold stator 10. Therefore, stray capacitance is extremely small because the bearing supporting section is an insulating material. Consequently, a shaft current flowing through the bearing is extremely small even if the shaft 23 is not insulated.

FIG. 4 is a sectional view showing a counter load side end of the shaft 23 in enlargement. In FIG. 4, a diameter d2 of a counter load side end 23d of the shaft 23, on which the counter load side roller bearing 21b is held via the resin section 24, is set smaller than a diameter dl of a center section 23e, on which the rotor resin magnet 22 is held via the resin section 24, to provide a step 23c.

A dimension between a counter load side end face 23f (an example of an axis direction end face) of the shaft 23 and the step 23c is longer than the thickness (the shaft direction length) of the counter load side roller bearing 21b. In an example shown in FIG. 4, the counter load side end face 23f of the shaft 23 is exposed.

In the resin section 24, a bearing contact surface 24d, which serves as a positioning in the axis direction during insertion of the shaft 23 of the counter load side roller bearing 21b into the counter load side end 23d, is formed to bend in a direction substantially perpendicular to a bearing fitting section 24f of the resin section 24.

A step section 24e is provided between the center cylindrical section 24g (the section corresponding to the rotor resin magnet 22) of the resin section 24, which is formed in the outer circumference of the center section 23e of the shaft 23, and the bearing contact surface 24d. It is essential that the diameter of the step section 24e is smaller than the inner diameter of the outer ring 21b-2 of the counter load side roller bearing 21b. In the rotor 20 shown in FIG. 3, the diameter of the step section 24e is set substantially the same as or slightly smaller than the outer diameter of the inner ring 21b-1 of the counter load side roller bearing 21b.

In general, in a roller bearing, a cover is provided between an outer ring and an inner ring to prevent grease from leaking to the outside from the inside of the roller bearing or prevent dust and the like from intruding into the inside of the roller bearing from the outside. The cover is located further on the inner side than both end faces of the roller bearing.

Therefore, even if the diameter of the step section 24e is set larger than the outer diameter of the inner ring 21b-1 of the counter load side roller bearing 21b, a section larger than the outer diameter of the inner ring 21b-l does not come into contact with the counter load side roller bearing 21b. Therefore, the diameter of the step section 24e is practically set substantially the same as or slightly smaller than the outer diameter of the inner ring 21b-1 of the counter load side roller bearing 21b.

By providing the step section 24e, when the shaft 23, the rotor resin magnet 22, and the resin magnet for position detection 25 are integrally molded by resin, if the counter load side bearing contact surface of the center cylindrical section of the resin section is formed by a bush, the counter load side bearing contact surface is formed by the bush up to the step section. Therefore, even if burrs occur on a fitting surface of a die, the burrs do not come into contact with the counter load side roller bearing 21b. Therefore, it is less likely that the counter load side roller bearing 21b is adversely affected.

In some case, when the rotor 20 receives a thermal shock, the center cylindrical section 24g of the resin section 24 is cracked. However, it is possible to cope with even such a case by providing the step section 24e in the center cylindrical section 24g and increasing the thickness in the radial direction of the center cylindrical section 24g in the step.

FIG. 5 is a diagram showing the rotor resin magnet 22. (a) of FIG. 5 is a left side view, (b) of FIG. 5 is an A-A sectional view of (a) of FIG. 5, and (c) of FIG. 5 is a right side view. The configuration of the ring-like rotor resin magnet 22 is explained with reference to FIG. 5. In the rotor resin magnet 22, cutouts 22a for securing coaxiality of the shaft 23 and the rotor resin magnet 22 during die closing in resin molding are formed at axis direction one end of the inner diameter of the rotor resin magnet 22 (the right side in (b) of FIG. 5). In an example shown in FIG. 5, the cutouts 22a are formed in eight places in the circumferential direction at substantially equal intervals ((c) of FIG. 5).

In the rotor resin magnet 22, pedestals 22b on which the resin magnet for position detection 25 is set are formed in the circumferential direction at substantially equal intervals on an end face at the axis direction other end (the left side in (b) of FIG. 5). The pedestals 22b are formed from places near the inner diameter of the rotor resin magnet 22 toward the outer diameter. Positioning protrusions 22c extend in the radial direction from the distal ends of the pedestals 22b toward places near the outer circumferential section of the rotor resin magnet 22. The positioning protrusions 22c are used for positioning in the circumferential direction (the rotating direction) of the rotor resin magnet 22 when the rotor magnet, the magnet for position detection, and the shaft are integrally molded by the resin.

The configuration of the ring-like resin magnet for position detection 25 is explained with reference to FIG. 6. (a) of FIG. 6 is a left side view of the resin magnet for position detection 25. (b) of FIG. 6 is a front view of the resin magnet for position detection 25. (c) of FIG. 6 is an A section enlarged view of (b) of FIG. 6.

The resin magnet for position detection 25 includes steps 25b at axis direction both ends on the inner diameter side. The steps 25b are necessary because a part of the resin section 24 is filled in the step 25b on an axis direction end side of the rotor 20 and prevents the resin magnet for position detection 25 from coming off in the axis direction. In FIG. 6, the resin magnet for position detection 25 including the steps 25b at both ends is shown. However, the step 25b only has to be present at one of the ends and located on the axis direction end side of the rotor 20. However, the resin magnet for position detection 25 including the steps 25b at both the ends is excellent in workability because it is possible to set the resin magnet for position detection 25 without worrying about the front and the back thereof in setting the resin magnet for position detection 25 in a die during the integral molding of the rotor 20 by the resin section 24.

The resin magnet for position detection 25 includes, in the steps 25b, at substantially equal intervals in the circumferential direction, eight ribs 25a that function as a whirl-stop in the circumferential direction when embedded in the resin section 24.

As shown in FIG. 3, in the resin section 24, an inner-diameter pressing section 24a for a die that holds the inner diameter of the resin magnet for position detection 25, a taper section 24b for making it easy to set the resin magnet for position detection 25 in a die (a lower die), and a resin injecting section 24c for resin injection during resin molding are formed after the resin molding.

The rotor resin magnet 22 is molded by mixing a magnetic material in thermoplastic resin. As showing in FIG. 5, the cutouts 22a are provided in a taper shape in the inner diameter from axis direction one end face. The pedestals 22b on which the resin magnet for position detection 25 is set are provided on the axis direction other end face on the opposite side of the axis direction one end face where the cutouts 22a are provided.

The resin magnet for position detection 25 can be separated from the end face of the rotor resin magnet 22 by the pedestals 22b of the rotor resin magnet 22 integrally molded with the shaft 23. The thickness of the resin magnet for position detection 25 can be minimized and the resin magnet for position detection 25 can be arranged in an arbitrary position. Costs can be reduced by filling the thermoplastic resin more inexpensive than the rotor resin magnet 22.

As shown in FIG. 6, the resin magnet for position detection 25 includes the steps 25b on both the sides in the thickness direction and includes, in the steps 25b on both the sides, the ribs 25a that function as a whirl-stop when embedded with resin. The coaxiality of the inner diameter of the resin magnet for position detection 25 and the outer diameter of the resin magnet for position detection 25 is accurately set.

When the resin magnet for position detection 25 is molded integrally with the shaft 23, the resin (the resin section 24) is filled in a taper shape in the outer circumference of the resin magnet for position detection 25 to cope with fluctuation in the outer diameter of the resin magnet for position detection 25. The filled resin is blocked by an axis direction end face (the outer side) on one side of the resin magnet for position detection 25 and the axis direction both end faces of the rotor resin magnet 22. Therefore, it is possible to suppress burrs from occurring on the outer diameter of the rotor resin magnet 22 and improvement of quality is realized.

A gate port used during the integral molding with the shaft 23 is arranged further on the inner side than the inner diameter of the rotor resin magnet 22 and the resin injecting section 24c is arranged in a convex shape. Therefore, concentration of pressure is relaxed, the resin is easily filled, and the convex section of the resin injecting section 24c can be used for positioning as well.

FIG. 7 is a sectional view of the rotor 20 according to a first modification. The rotor 20 according to the first modification is different from the rotor 20 shown in FIG. 3 in that a center hole 23b is formed at the counter load side end of the shaft 23.

When the shaft 23, the rotor resin magnet 22, and the resin magnet for position detection 25 are integrally molded by the resin section 24, the center hole 23b of the shaft 23 is set in a die (an upper die). Consequently, the coaxiality of the rotor resin magnet 22 and the shaft 23 is improved.

Center holes 23b can be formed at both the ends of the shaft 23.

FIG. 8 is a sectional view of the rotor 20 according to a second modification. The rotor 20 according to the second modification is different from the rotor 20 shown in FIG. 3 in that the end face of the counter load side end of the shaft 23 is covered with the resin section 24 and the center hole 23b is formed on the end face of the counter load side end of the shaft 23.

On the end face of the counter load side end of the shaft 23, the center hole 23b section is exposed and the other sections are covered with the resin section 24.

The end face of the counter load side end of the shaft 23 excluding the center hole 23b section is covered with the resin section 24. Consequently, when the counter load side roller bearing 21b is press-fitted into the counter load side end of the shaft 23, it is possible to suppress peeling and turn-up of the resin section 24.

As in the rotor 20 according to the first modification shown in FIG. 7, when the shaft 23, the rotor resin magnet 22, and the resin magnet for position detection 25 are integrally molded by the resin, a protrusion to be fitted in a center hole, the coaxiality of which with a shaft inserting section provided in the die (the upper die) is secured, is fitted in the center hole 23b of the shaft 23. Consequently, it is possible to hold the shaft in a state in which the coaxiality is secured. The coaxiality of the rotor resin magnet 22 and the shaft 23 is improved.

FIG. 9 is a sectional view of the rotor 20 according to a third modification. The rotor 20 according to the third modification is different from the rotor 20 shown in FIG. 3 in that a part of the counter load side end face 23f (the outer circumferential section side of the counter load side end 23d) of the shaft 23 is covered with the resin section 24.

As in the rotor 20 shown in FIG. 8, the counter load side end face 23f excluding the center section of the counter load side end face 23f is covered with the resin section 24. Consequently, when the counter load side roller bearing 21b is press-fitted into the counter load side end of the shaft 23, it is possible to suppress peeling and turn-up of the resin section 24.

When the shaft 23, the rotor resin magnet 22, and the resin magnet for position detection 25 are integrally molded by the resin section 24, the counter load side end face 23f is pressed by a die. Consequently, the coaxiality of the rotor resin magnet 22 and the shaft 23 is also secured, although not as much as that in the examples shown in FIGS. 7 and 8 in which the center hole 23b is formed in the shaft 23.

FIG. 10 is a sectional view of the rotor 20 according to a fourth modification. The rotor 20 according to the fourth modification is different from the rotor 20 shown in FIG. 3 in that the entire counter load side end 23d of the shaft 23 is covered with the resin section 24.

The entire counter load side end 23d of the shaft 23 is covered with the resin section 24. Consequently, when the counter load side roller bearing 21b is press-fitted into the counter load side end of the shaft 23, it is possible to further suppress peeling and turn-up of the resin section 24.

FIG. 11 is a sectional view of the rotor 20 according to a fifth modification. The rotor 20 according to the fifth embodiment is different from the rotor 20 shown in FIG. 3 in that the resin section 24 interposed between the load side roller bearing 21a and the shaft 23 as well to insulate the load side roller bearing 21a and the shaft 23.

By configuring the rotor 20 as shown in FIG. 11, it is possible to further reduce the shaft current in the load side roller bearing 21a. Further, it is possible to reduce, using a steel sheet frame in a section other than the mold stator 10, for example, the external hull, a shaft current of an electric motor in which brackets of metal are used on a load side and a counter load side.

In the rotor 20 shown in FIG. 11, the configuration of the counter load side end 23d of the shaft 23 is the same as the configuration shown in FIG. 3. However, the other configurations shown in FIGS. 7 to 10 can be adopted.

In the electric motor 100 shown in FIG. 1, the mold stator 10 side is the load side and the bracket 30 side is the counter load side. However, the load side and the counter load side can be opposite.

In the rotor 20 shown in FIGS. 3 and 7 to 11, the rotor resin magnet 22 molded by mixing the magnetic material in the thermoplastic resin is used as the permanent magnet. However, other permanent magnets (rare earth magnets (neodymium and samarium cobalt), ferrite, etc.) can be used.

Similarly, the other permanent magnets (rare earth magnets (neodymium and samarium cobalt), ferrite, etc.) can be used as the resin magnet for position detection 25.

As explained above, when an electric motor is operated using an inverter, for the purpose of realizing a reduction in noise of the electric motor caused according to switching of transistors in a power circuit, a carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current easily flows to the roller bearing. The electric current flowing to the roller bearing causes corrosion called electrolytic corrosion on both tracks of the inner ring and the outer ring and a rolling contact surface of a rolling element (balls or rollers that roll between the inner and outer rings) and deteriorates the durability of the roller bearing.

Therefore, the rotor 20 according to this embodiment is particularly effective for a reduction in the shaft current when the electric motor 100 is operated using the inverter.

FIG. 12 is a configuration diagram of the driving circuit 200 that drives the electric motor 100. As shown in FIG. 12, the driving circuit 200 of an inverter system includes a position detecting circuit 110, a waveform generating circuit 120, a pre-driver circuit 130, and a power circuit 140.

The position detecting circuit 110 detects a magnetic pole of the resin magnet for position detection 25 of the rotor 20 using the Hall IC 49b.

The waveform generating circuit 120 generates, based on a speed instruction signal for instructing rotating speed of the rotor 20 and a position detection signal from the position detecting circuit 110, a PWM (Pulse Width Modulation) signal for performing inverter driving and outputs the PWM signal to the pre-driver circuit 130.

The pre-driver circuit 130 outputs a transistor driving signal for driving transistors 141 (six) of the power circuit 140.

The power circuit 140 includes a direct-current power supply input section and inverter output section, wherein arms are formed by connecting the transistors 141 and diodes 142 in parallel and further connecting the connected transistors 141 and diodes 142 in series.

Because the electric motor 100 has three phases, the inverter output sections of three arms are connected to the respective coils 42. Direct-current power supplies +, - of 140 V or 280 V obtained by rectifying alternating-current 100 V or 200 V of a commercial power supply are connected to the direct-current power supply input section.

When the speed instruction signal is input to the driving circuit 200, the waveform generating circuit 120 sets electric conduction timing to the coils 42 of the three phases according to the position detection signal and generates and outputs a PWM signal corresponding to the input of the speed instruction signal. The pre-driver circuit 130 that receives the input of the PWM signal drives the transistors 141 in the power circuit 140.

The inverter output sections drive the transistors 141 to apply a voltage to the coils 42. An electric current flows to the coils 42, torque is generated, and the rotor 20 rotates. The electric motor 100 rotates at rotating speed corresponding to the speed instruction signal. The electric motor 100 is also stopped according to the speed instruction signal.

A manufacturing process for the rotor 20 is shown in FIG. 13.
(1) Molding and demagnetization of the resin magnet for position detection 25 and the rotor resin magnet 22 and machining of the shaft 23 are performed (step 1).
(2) The resin magnet for position detection 25 is set in the lower die with the end having the step 25b faced down to cause the inner-diameter pressing section provided in the lower die to hold the inner diameter of the resin magnet for position detection 25 (step 2).
(3) The positioning protrusions 22c of the rotor resin magnet 22 are fit in a positioning protrusion inserting section provided in the lower die and are set in the lower die (step 3).
(4) The shaft 23 is set in the lower die and the cutouts 22a of the rotor resin magnet 22 are pressed by a cutout pressing section of the upper die to be closed (step 4).
(5) The resin (the resin section 24) is molded (step 5). When the rotor resin magnet 22, the resin magnet for position detection 25, and the shaft 23 are integrally molded by the resin section 24, the integral molding is performed such that the resin section 24 is interposed between the shaft 23 and at least one of the load side roller bearing 21a and the counter load side roller bearing 21b.
(6) Magnetization of the resin magnet for position detection 25 and the rotor resin magnet 22 is performed (step 6).
(7) The load side roller bearing 21a and the counter load side roller bearing 21b are assembled to the shaft 23 (step 7) .

With the manufacturing process explained above, when the rotor resin magnet 22, the shaft 23, and the resin magnet for position detection 25 are integrated by the resin (the resin section 24), all the components are set in the die and resin-molded. Therefore, a reduction in costs of the rotor 20 can be realized through a reduction in work processes.

The resin magnet for position detection 25 can be separated from the end face of the rotor resin magnet 22 by the pedestals 22b of the rotor resin magnet 22. The thickness of the resin magnet for position detection 25 can be minimized and the resin magnet for position detection 25 can be arranged in an arbitrary position. Costs can be reduced by filling the thermoplastic resin more inexpensive than the rotor resin magnet 22.

Because the resin magnet for position detection 25 is symmetrical in the thickness direction, the resin magnet for position detection 25 can be set in the die without adjusting the direction of the resin magnet for position detection 25.

A section where the outer diameter passes when the resin magnet for position detection 25 for the lower die is set is tapered to be wide in an opening (the taper section 24b of the resin section 24). Therefore, because the resin magnet for position detection 25 can be set without being caught by the lower die, it is possible to reduce costs according to improvement of productivity through simplification of a work process.

When the resin magnet for position detection 25 is set in the lower die, the inner diameter is held by the inner-diameter pressing section provided in the lower die. Consequently, the accuracy of the coaxiality of the shaft 23 and the rotor resin magnet 22 is secured.

The cutout pressing section provided in the upper die presses the cutouts 22a provided in the inner diameter of the rotor resin magnet 22. Consequently, the accuracy of the coaxiality of the shaft 23 and the rotor resin magnet 22 is secured.

As explained above, in this embodiment, the resin for integrally molding the shaft 23 and the ring-like rotor resin magnet 22 is filled and the resin section 24 is interposed between the counter load side roller bearing 21b supported by the bracket 30 of metal (having electric conductivity) and the shaft 23, so as to insulate by the resin section 24 and thus the shaft current is suppressed. Consequently, it is possible to suppress occurrence of electrolytic corrosion of the counter load side roller bearing 21b. However, the same effect can be obtained when the ring-like resin magnet for position detection 25 is integrated together with the shaft 23 and the ring-like rotor resin magnet 22 by the resin section 24.

The step section 24e is provided between the center cylindrical section 24g of the resin section 24, which is formed in the outer circumference of the center section 23e of the shaft 23, and the bearing contact surface 24d. Consequently, when the shaft 23 and the rotor resin magnet 22 are integrally molded by the resin, if the counter load side bearing contact surface of the center cylindrical section of the resin section is formed by a bush, the counter load side bearing contact surface is formed by the bush up to the step section. Therefore, even if burrs occur on the fitting surface of the die, the burrs do not come into contact with the counter load side roller bearing 21b. Therefore, it is less likely that the counter load side roller bearing 21b is adversely affected. However, the same effect can be obtained when the ring-like resin magnet for position detection 25 is integrated together with the shaft 23 and the ring-like rotor resin magnet 22 by the resin section 24.

In some case, when the rotor 20 receives a thermal shock, the center cylindrical section 24g of the resin section 24 is cracked. However, it is possible to cope with such a case by providing the step section 24e in the center cylindrical section 24g and increasing the thickness in the radial direction of the center cylindrical section 24g in the step section 24e.

As in the rotor 20 according to the first modification shown in FIG. 7, the center hole 23b is formed at the counter load side end of the shaft 23. Consequently, when the shaft 23, the rotor resin magnet 22, and the resin magnet for position detection 25 are integrally molded by the resin, the protrusion to be fit in the center hole 23b, the coaxiality of which with the shaft inserting section provided in the die (the upper die) is secured, is fitted in the center hole 23b of the shaft 23. Therefore, it is possible to hold the shaft 23 in a state in which the coaxiality is secured. The coaxiality of the rotor resin magnet 22 and the shaft 23 is improved.

As in the rotor 20 according to the second modification shown in FIG. 8, the end face of the counter load side end of the shaft 23 is covered with the resin section 24 and the center hole 23b is formed on the end face of the counter load side end of the shaft 23. Consequently, when the counter load side roller bearing 21b is press-fitted into the counter load side end of the shaft 23, it is possible to suppress peeling and turn-up of the resin section 24. Further, when the shaft 23, the rotor resin magnet 22, and the resin magnet for position detection 25 are integrally molded by the resin, the protrusion to be fitted in the center hole 23b, the coaxiality of which with a shaft inserting section provided in the die (the upper die) is secured, is fit in the center hole 23b of the shaft 23. Consequently, it is possible to hold the shaft 23 in a state in which the coaxiality is secured. The coaxiality of the rotor resin magnet 22 and the shaft 23 is improved.

As in the rotor 20 according to the third modification shown in FIG. 9, a part of the counter load side end face 23f (the outer circumferential section side of the counter load side end 23d) of the shaft 23 is covered with the resin section 24. Consequently, when the counter load side roller bearing 21b is press-fitted into the counter load side end of the shaft 23, it is possible to suppress peeling and turn-up of the resin section 24. When the shaft 23, the rotor resin magnet 22, and the resin magnet for position detection 25 are integrally molded by the resin section 24, the counter load side end face 23f is pressed by the die. Consequently, the coaxiality of the rotor resin magnet 22 and the shaft 23 is also secured.

As in the rotor 20 according to the fourth modification shown in FIG. 10, the entire counter load side end 23d of the shaft 23 is covered with the resin section 24. Consequently, when the counter load side roller bearing 21b is press-fitted into the counter load side end of the shaft 23, it is possible to further suppress peeling and turn-up of the resin section 24.

As in the rotor 20 according to the fifth modification shown in FIG. 11, the resin section 24 is interposed between the load side roller bearing 21a and the shaft 23 as well to insulate the load side roller bearing 21a and the shaft 23. Consequently, it is possible to further reduce the shaft current in the load side roller bearing 21a. Further, it is possible to reduce, using a steel sheet frame in a section other than the mold stator 10, for example, the external hull, a shaft current of an electric motor in which brackets of metal are used on a load side and a counter load side.

When an electric motor is operated using an inverter, for the purpose of realizing a reduction in noise of the electric motor, a carrier frequency of the inverter is set high. As the carrier frequency is set higher, a shaft voltage generated based on high-frequency induction in a shaft of the electric motor increases and a potential difference present between an inner ring and an outer ring of a roller bearing that supports the shaft increases. Therefore, an electric current flowing to the roller bearing also increases. Therefore, the rotor 20 according to this embodiment is particularly effective for a reduction in the shaft current generated when the electric motor 100 is operated using the inverter. A method of detecting the magnetic pole of the resin magnet for position detection 25 of the rotor 20 using the Hall IC 49b, which is a sensor for detecting the magnetic pole, is explained above. However, it goes without saying that the same effect is obtained in a sensor-less driving system for, without using the resin magnet for position detection 25 and the Hall IC 49b, detecting an electric current flowing through the coils using a current detector (not shown) and operating the electric motor using a microcomputer or the like in the waveform generating circuit 120.

### Second Embodiment.

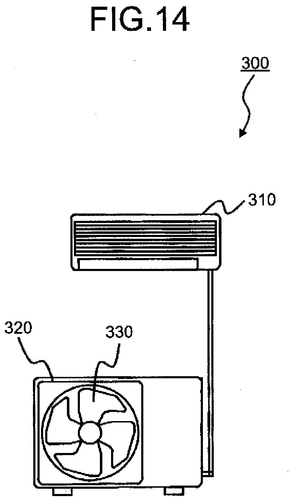

FIG. 14 is a diagram showing a second embodiment and is a configuration diagram of an air conditioner 300.

The air conditioner 300 includes indoor equipment 310 and outdoor equipment 320 connected to the indoor equipment 310. A fan for indoor equipment (not shown in the figure) is mounted on the indoor equipment 310. A fan for outdoor equipment 330 is mounted on the outdoor equipment 320.

The fan for outdoor equipment 330 and the fan for indoor equipment include the electric motor 100 according to the first embodiment as a driving source.

The electric motor 100 according to the first embodiment is mounted on the fan for outdoor equipment 330 and the fan for indoor equipment, which are main components of the air conditioner 300. Consequently, the durability of the air conditioner 300 is improved.

### Industrial Applicability

As application examples of the electric motor 100 according to the present invention, the electric motor 100 can be used while being mounted on a ventilation fan, a household electric appliance, a machine tool, or the like.

### Reference Signs List

- 10: MOLD STATOR
- 10a: INNER CIRCUMFERENTIAL SECTION
- 11: BEARING SUPPORTING SECTION
- 20: ROTOR
- 21a: LOAD SIDE ROLLER BEARING
- 21a-1: INNER RING
- 21a-2: OUTER RING
- 21a-3: ROLLING ELEMENT
- 21b: COUNTER LOAD SIDE ROLLER BEARING
- 21b-1: INNER RING
- 21b-2: OUTER RING
- 21b-3: ROLLING ELEMENT
- 22: ROTOR RESIN MAGNET
- 22a: CUTOUTS
- 22b: PEDESTALS
- 22c: POSITIONING PROTRUSIONS
- 23: SHAFT
- 23a: KNURL
- 23b: CENTER HOLE
- 23c: STEP
- 23d: COUNTER LOAD SIDE END
- 23e: CENTER SECTION
- 23f: COUNTER LOAD SIDE END FACE
- 24: RESIN SECTION
- 24a: INNER-DIAMETER PRESSING SECTION
- 24b: TAPER SECTION
- 24c: RESIN INJECTING SECTION
- 24d: CONTACT SURFACE
- 24e: STEP SECTION
- 24f: FITTING SECTION
- 24g: CENTER CYLINDRICAL SECTION
- 24h: COUNTER LOAD SIDE END FACE
- 25: RESIN MAGNET FOR POSITION DETECTION
- 25a: RIBS
- 25b: STEP
- 30: BRACKET
- 30a: BEARING SUPPORTING SECTION
- 30b: PRESS-FITTING SECTION
- 40: STATOR
- 41: STATOR IRON CORE
- 42: COILS
- 43: INSULATING SECTION
- 44: TERMINALS
- 44a: POWER SUPPLY TERMINALS
- 44b: NEUTRAL TERMINALS
- 45: SUBSTRATE
- 47: LEAD WIRE
- 48: SQUARE PILLAR
- 49a: IC
- 49b: HALL IC
- 50: MOLD RESIN
- 100: ELECTRIC MOTOR
- 110: POSITION DETECTING CIRCUIT
- 120: WAVEFORM GENERATING CIRCUIT
- 130: PRE-DRIVER CIRCUIT
- 140: POWER CIRCUIT
- 141: TRANSISTORS
- 142: DIODES
- 200: DRIVING CIRCUIT
- 300: AIR CONDITIONER
- 310: INDOOR EQUIPMENT
- 320: OUTDOOR EQUIPMENT
- 330: FAN FOR OUTDOOR EQUIPMENT

## Claims

1. An electric motor (100) adapted to be driven by an inverter, comprising:
a rotor (20) including:
a rotor magnet (22);
a shaft (23); and
a resin section (24) formed on an outer circumference of the shaft (23) so as to integrate the rotor magnet (22) and the shaft (23);
two roller bearings (21a, 21b) mounted on the shaft (23);
a mold stator (10) including:
a stator (40); and
a mold resin (50), which is for molding the stator (40), including:
an opening at one end in an axis direction; and
a bearing supporting section (11) formed at another end in the axis direction and supporting one (21a) of the two roller bearings (21a, 21b);
a metal bracket (30) press-fitted to the one end in the axial direction of the mold stator (10) so as to close the opening and supporting another (21b) of the two roller bearings (21a, 21b) with a bearing supporting section (30a),
**characterized in that**
the resin section (24) formed on the outer circumference of the shaft (23) extends between the shaft (23) and the roller bearing (21b) supported by the metal bracket (30).

2. The electric motor according to claim 1,
wherein the two roller bearings (21a, 21b) include a load side roller bearing (21a) and a counter load side roller bearing (21b), the counter load side roller bearing is the roller bearing (21b) supported by the metal bracket (30).

3. The electric motor according to claim 1 or 2,
wherein a bearing contact surface (24d), which serves as a positioning reference in an axis direction during insertion of the roller bearing (21b) supported by the metal bracket (30) into the shaft (23), is formed on the resin section (24) extending between the shaft (23) and the roller bearing (21b) supported by the metal bracket (30).

4. The electric motor according to claim 3,
wherein a step section (24e) having a diameter smaller than an inner diameter of an outer ring (21b-2) of the roller bearing (21b) is provided between a center cylindrical section (24g) of the resin section (24), which is located on an inner side of the rotor magnet (22) and formed on an outer circumference of a center section (23e) of the shaft (23), and the bearing contact surface (24d).

5. The electric motor according to any one of claims 1 to 4,
wherein the resin section (24) formed between the roller bearing (21b) supported by the metal bracket (30) and the shaft (23) covers at least a part of an axis direction end face (23f) of the shaft (23).

6. The electric motor according to any one of claims 1 to 5,
wherein the shaft (23) includes a center hole (23b) at least at one of axis direction both ends.

7. The electric motor according to any one of claims 1 to 6,
wherein a material of the resin section (24) is a mixture of a glass filler and thermoplastic resin.

8. An air conditioner (300) comprising:
a fan; and
the electric motor (100) according to any one of claims 1 to 7 that drives the fan.

## Patentansprüche

1. Elektromotor (100), ausgelegt, um von einem Wechselrichter angetrieben zu werden, umfassend:
einen Rotor (20), aufweisend:
einen Rotormagnet (22);
eine Welle (23); und
einen Harzabschnitt (24), der an einem äußeren Umfang der Welle (23) ausgebildet ist, um den Rotormagnet (22) und die Welle (23) zu integrieren;
zwei Kugellager (21a, 21b), die auf der Welle (23) angebracht sind;
einen Formstator (10), aufweisend:
einen Stator (40); und
ein Formharz (50) zum Formen des Stators (40), aufweisend:
eine Öffnung an einem Ende in einer Achsenrichtung; und
einen Lagerstützabschnitt (11), der an einem anderen Ende in der Achsenrichtung ausgebildet ist und eines (21a) der zwei Kugellager (21a, 21b) stützt;
eine Metallklammer (30), die an dem einen Ende in axialer Richtung des Formstators (10) pressgepasst ist, um die Öffnung zu schließen, und die ein anderes (21b) der beiden Kugellager (21a, 21b) mit einem Lagerstützabschnitt (30a) stützt,
**dadurch gekennzeichnet, dass**
sich der Harzabschnitt (24), der an dem äußeren Umfang der Welle (23) ausgebildet ist, zwischen der Welle (23) und dem durch die Metallklammer (30) gestützten Kugellager (21b) erstreckt.

2. Elektromotor nach Anspruch 1,
wobei die Kugellager (21a, 21b) ein Lastseitenkugellager (21a) und ein Gegenlastseitenkugellager (21b) aufweisen, wobei das Gegenlastseitenkugellager das durch die Metallklammer (30) gestützte Kugellager (21b) ist.

3. Elektromotor nach Anspruch 1 oder 2,
wobei eine Lagerkontaktfläche (24d), die als eine Positionierungsreferenz in einer Achsenrichtung während des Einsetzens des durch die Metallklammer (30) gestützten Kugellagers (21b) in die Welle (23) dient, auf dem Harzabschnitt (24) ausgebildet ist, der sich zwischen der Welle (23) und dem durch die Metallklammer (30) gestützten Kugellager (21b) erstreckt.

4. Elektromotor nach Anspruch 3,
wobei ein Stufenabschnitt (24e), der einen Durchmesser aufweist, der kleiner als ein Innendurchmesser eines Außenrings (21b'2) des Kugellagers (21b) ist, zwischen einem mittleren zylindrischen Abschnitt (24g) des Harzabschnitts (24), der sich an einer Innenseite des Rotormagneten (22) befindet und an einem Außenumfang eines Mittelabschnitts (23e) der Welle (23) ausgebildet ist, und der Lagerkontaktfläche (24d) vorgesehen ist.

5. Elektromotor nach einem der Ansprüche 1 bis 4,
wobei der Harzabschnitt (24), der zwischen dem durch die Metallklammer (30) gestützten Kugellager (21b) und der Welle (23) ausgebildet ist, zumindest einen Teil einer Achsenrichtung-Endfläche (23f) der Welle (23) bedeckt.

6. Elektromotor nach einem der Ansprüche 1 bis 5,
wobei die Welle (23) ein Mittelloch (23b) an zumindest einem beider Enden der Achsenrichtung aufweist.

7. Elektromotor nach einem der Ansprüche 1 bis 6,
wobei ein Material des Harzabschnitts (24) eine Mischung aus einem Glasfüllstoff und thermoplastischem Harz ist.

8. Klimaanlage (300), umfassend:
einen Lüfter; und
den Elektromotor (100) nach einem der Ansprüche 1 bis 7, der den Lüfter antreibt.

## Revendications

1. Moteur électrique (100) adapté pour être entraîné par un inverseur, comprenant:
un rotor (20) comprenant :
un aimant de rotor (22) ;
un arbre (23) ; et
une section de résine (24) formée sur une circonférence externe de l'arbre (23) afin d'intégrer l'aimant de rotor (22) et l'arbre (23) ;
deux paliers à rouleaux (21a, 21b) montés sur l'arbre (23) ;
un stator de moule (10) comprenant :
un stator (40) ; et
une résine de moule (50) qui est prévue pour mouler le stator (40), comprenant :
une ouverture au niveau d'une extrémité dans une direction axiale ; et
une section de support de palier (11) formée au niveau d'une autre extrémité dans la direction axiale et supportant l'un (21a) des deux paliers à rouleaux (21a, 21b) ;
un support métallique (30) monté à la presse sur ladite une extrémité dans la direction axiale du stator de moule (10) afin de fermer l'ouverture et supportant un autre (21b) des deux paliers à rouleaux (21a, 21b) avec une section de support de palier (30a),
**caractérisé en ce que** :
la section de résine (24) formée sur la circonférence externe de l'arbre (23) s'étend entre l'arbre (23) et le palier à rouleaux (21b) supporté par le support métallique (30).

2. Moteur électrique selon la revendication 1,
dans lequel les deux paliers à rouleaux (21a, 21b) comprennent un palier à rouleaux du côté de la charge (21a) et un palier à rouleaux du côté de la charge antagoniste (21b), le palier à rouleaux du côté de la charge antagoniste est le palier à rouleaux (21b) supporté par le support métallique (30).

3. Moteur électrique selon la revendication 1 ou 2,
dans lequel la surface de contact de palier (24d) qui sert de référence de positionnement dans une direction axiale pendant l'insertion du palier à rouleaux (21b) supporté par le support métallique (30) dans l'arbre (23), est formée sur la section de résine (24) s'étendant entre l'arbre (23) et le palier à rouleaux (21b) supporté par le support métallique (30).

4. Moteur électrique selon la revendication 3,
dans lequel une section de gradin (24e) ayant un diamètre inférieur à un diamètre interne d'une bague externe (21b-2) du palier à rouleaux (21b) est prévue entre une section cylindrique centrale (24g) de la section de résine (24), qui est positionnée sur un côté interne de l'aimant de rotor (22) et formée sur une circonférence externe de la section centrale (23e) de l'arbre (23), et de la surface de contact de palier (24d).

5. Moteur électrique selon l'une quelconque des revendications 1 à 4,
dans lequel la section de résine (24) formée entre le palier à rouleaux (21b) supporté par le support métallique (30) et l'arbre (23) recouvre au moins une partie d'une face d'extrémité (23f) dans une direction axiale de l'arbre (23).

6. Moteur électrique selon l'une quelconque des revendications 1 à 5,
dans lequel l'arbre (23) comprend un trou central (23b) au moins au niveau d'une extrémité des deux extrémités dans la direction axiale.

7. Moteur électrique selon l'une quelconque des revendications 1 à 6,
dans lequel un matériau de la section de résine (24) est un mélange d'une matière de remplissage à base de verre et d'une résine thermoplastique.

8. Climatiseur (300) comprenant :
un ventilateur ; et
un moteur électrique (100) selon l'une quelconque des revendications 1 à 7 qui entraîne le ventilateur.
